# FASCICULE DE BREVET EUROPEEN

(11) **EP 3 376 388 B1**
(45) Date de publication et mention de la délivrance du brevet: **26.07.2023**
(21) Numéro de dépôt: 18156807.2
(22) Date de dépôt: 14.02.2018
(51) Int. Cl.: G06F 9/54

(54) **PROCÉDÉ DE COMMUNICATION POUR COMMUNIQUER DES DONNÉES INFORMATIQUES ENTRE AU MOINS UN AÉRONEF ET AU MOINS UN ÉQUIPEMENT ÉLECTRONIQUE DÉPORTÉ**
VERFAHREN ZUR KOMMUNIKATION VON COMPUTERDATEN ZWISCHEN MINDESTENS EINEM FLUGZEUG UND MINDESTENS EINEM SEPARATEN ELEKTRONISCHEN GERÄT
A COMMUNICATION METHOD FOR COMMUNICATING COMPUTER DATA BETWEEN AT LEAST ONE AIRCRAFT AND AT LEAST ONE SEPARATE PIECE OF ELECTRONIC EQUIPMENT

(30) Priorité: 16.03.2017 FR 1770258
(43) Date de publication de la demande: 19.09.2018
(73) Titulaire: Airbus Helicopters, 13725 Marignane Cedex (FR)
(72) Inventeur: VICQ, Alexandre, 13004 Marseille (FR); BOURDILLON, Rémi, 13880 Velaux (FR)
(74) Mandataire: GPI & Associés

(56) Documents cités:
- WO-A2-00/55770
- FR-A1- 2 485 779
- GB-A- 2 079 978
- GB-A- 2 123 996
- GB-A- 2 127 656
- US-A1- 2002 035 416
- US-A1- 2004 008 253
- US-A1- 2008 150 735
- US-A1- 2016 093 124
- MITCHELL K ET AL: "General Aviation Aircraft Flight Operations Quality Assurance: Overcoming the Obstacles", IEEE AEROSPACE AND ELECTRONIC SYSTEMS MAGAZINE, IEEE SERVICE CENTER, PISCATAWAY, NJ, US, vol. 22, no. 6, 1 juin 2007 (2007-06-01), pages 9-15, XP011187236, ISSN: 0885-8985
- AZZAM H ET AL: "FUMS(TM) Fusion For Improved Aircraft MAAAP", AEROSPACE CONFERENCE, 2005 IEEE, IEEE, PISCATAWAY, NJ, USA, 5 mars 2005 (2005-03-05), pages 1-15, XP010864494, DOI: 10.1109/AERO.2005.1559685 ISBN: 978-0-7803-8870-3

## Description

La présente invention se rapporte au domaine des procédés de communication permettant à au moins un aéronef de communiquer des données informatiques à au moins un équipement électronique déporté formé par exemple par un serveur un micro-ordinateur portable ou non, un "smartphone" ou une tablette tactile notamment. Ainsi, un équipement électronique déporté peut notamment comporter une interface homme machine permettant au moins de communiquer à une personne ces données informatiques.

De telles données informatiques sont généralement générées lors du vol ou plus généralement d'une utilisation de l'aéronef à partir de capteurs mesurant les variations d'un paramètre d'état tel la tension ou l'intensité d'un signal électrique parcourant ces capteurs. De tels capteurs peuvent ainsi permettre de réaliser des mesures d'un paramètre physique telles que par exemple les variations de la position ou de l'altitude de l'aéronef, de la pression ou de la température d'un fluide circulant dans l'aéronef, des vibrations auxquelles est soumis un organe de l'aéronef, de la quantité de carburant présente dans le ou les réservoirs, etc....

Ces mesures forment des "données avioniques" correspondant à des données informatiques brutes codées. Lors de l'utilisation de l'aéronef, toutes ces données avioniques sont ainsi enregistrées dans un support de stockage agencé sur l'aéronef.

Une fois au sol, le support de stockage peut être extrait manuellement de l'aéronef pour être introduit dans un lecteur chez l'exploitant de cet aéronef. Un tel lecteur externe à l'aéronef permet alors a posteriori de collecter l'ensemble des données avioniques enregistrées pendant le vol de l'aéronef. Les données avioniques doivent ensuite être décodés par des logiciels spécifiés et développés par le fabriquant de l'aéronef.

De façon générale, de telles données avioniques collectées sont très lourdes et représentent plusieurs mégaoctets pour chaque heure de vol de l'aéronef. De plus, si de telles données avioniques peuvent dans certains cas être transférées et utilisées au moins en lecture individuellement par un programme certifié dédié ou une application métier qui peut être certifiée et également dédiée, ces données avioniques ne constituent en aucun cas des données standardisées aptes à se rapporter à un paramètre physique unique fonction de la mesure réalisée par le capteur lors de l'utilisation de l'aéronef.

De telles données avioniques ne peuvent donc pas être récupérées et utilisées librement par une pluralité de programmes non certifiés par le fabricant de l'aéronef.

Par ailleurs, certaines données avioniques, comme celles correspondant par exemple à la position courante de l'aéronef, peuvent néanmoins être individuellement transmises au sol lors du vol de l'aéronef par un procédé de communication de données sans fil.

Cependant dans ce cas, les informations transmises sont très limitées en poids. Ces données avioniques ne peuvent donc en aucun cas être représentatives de l'ensemble des capteurs équipant l'aéronef. En outre, de telles données avioniques ne peuvent être partagées rapidement entre plusieurs opérateurs tels que par exemple l'exploitant de l'aéronef qui peut être un utilisateur locataire ou propriétaire de l'aéronef ou encore le fabriquant de l'aéronef et un tiers comme par exemple le fabriquant d'un composant de l'aéronef.

En outre, il est connu tel que décrit dans le document US 2016/0093124A1 des systèmes et procédés d'enregistrement et d'analyse de données dans lesquels une plateforme telle un aéronef ou un drone est équipée de capteurs. Les mesures effectuées par les capteurs sont alors transmises à une unité de calculs et d'analyses qui peut enregistrer ces données brutes et/ou filtrées dans une mémoire préalablement ou postérieurement à l'analyse de ces données brutes et/ou filtrées.

Cependant dans ce cas, l'unité de calcul et la mémoire sont agencés sur la plateforme équipée des capteurs. Ainsi, la transmission des données brutes et/ou filtrées n'est pas effectuée entre la plateforme et un organe disjoint de cette plateforme préalablement à leur analyse

Par ailleurs, le document US 2016/0093124A1 présente uniquement une unité de traitement permettant de filtrer les données préalablement à leur analyse et/ou stockage sur la plateforme. Par suite, une telle filtration des données consiste à nettoyer le signal émis par les capteurs d'éventuels parasites.

Cependant, dans ce cas en aucun cas il est décrit le besoin de procéder à un décodage des données issues des capteurs. Ainsi, le document US 2016/0093124A1 ne présente pas d'étape de décodage permettant de générer des données décodées aptes à être traitées.

Par suite, les données filtrées ne sont pas stockées dans une mémoire disjointe de la plateforme ou d'un équipement électronique déporté.

De même, le document US 2002/035416 A1 décrit quant à lui un procédé de transmission de données entre un aéronef et une station sol.

Cependant, un tel procédé ne décrit pas la transmission de données brutes codées, ni une étape de décodage, ni une étape de stockage dans une mémoire disjointe à la fois de l'aéronef et de la station sol et non plus une étape d'utilisation de données par un équipement électronique déporté.

La présente invention a alors pour objet de proposer un procédé permettant de s'affranchir des limitations mentionnées ci-dessus. Un tel procédé permet ainsi de réduire considérablement le volume des données informatiques destinées à être échangées entre les différents capteurs d'un aéronef et au moins équipement électronique déporté.

Un autre objectif de l'invention est de permettre à différents opérateurs dont le personnel est équipé d'équipements électroniques déportés d'échanger des données informatiques standardisées de quelques kilooctets et ne nécessitant pas de décodage.

De telles données informatiques standardisées peuvent alors être échangées très rapidement, voire en quasi temps réel, notamment par un protocole de communication sans fil ou un protocole de réseau local utilisant par exemple une connexion filaire de type Ethernet, directement entre un équipement électronique déporté et un aéronef dans lequel ces données standardisées DS peuvent être enregistrées ou encore entre un équipement électronique déporté et une mémoire constituant une image dématérialisée unique de l'aéronef à partir de données standardisés uniques pour chaque paramètre physique mesuré sur l'aéronef, cette mémoire étant alors contenue dans des serveurs informatiques distants de l'aéronef mais reliés au moins temporairement à l'aéronef par l'intermédiaire d'un réseau internet notamment.

L'invention se rapporte donc à un procédé de communication pour communiquer des données informatiques entre au moins un aéronef et au moins un équipement électronique déporté.

Un tel procédé est remarquable en ce qu'il comporte les étapes suivantes :
- une première étape de transmission pour transmettre à au moins un premier calculateur des données brutes DB issues d'au moins un capteur agencé sur l'aéronef, le (ou les) capteur(s) étant apte à détecter des variations d'au moins un paramètre d'état lors d'une utilisation de l'aéronef, le (ou les) premier(s) calculateur(s) étant disjoint(s) du (ou des) aéronef(s) et du (ou des) équipement(s) électronique(s) déporté(s),
- une première étape de décodage pour décoder les données brutes DB et générer des données décodées DD apte à être traitées, la première étape de décodage étant réalisée par le (ou les) premier(s) calculateur(s),
- une première étape de traitement pour traiter les données décodées DD et générer des données standardisées DS aptes à être utilisées par le (ou les) équipement(s) électronique(s) déporté(s), la première étape de traitement étant réalisée par le (ou les) premier(s) calculateur(s),
- une première étape de stockage pour enregistrer les données standardisées DS dans au moins une première mémoire, la (ou les) première(s) mémoire(s) étant disjointe(s) du (ou des) aéronef(s) et du (ou des) équipement(s) électronique(s) déporté(s),
- une première étape d'utilisation permettant à l'(aux) équipement(s) électronique(s) déporté(s) d'utiliser les données standardisées DS contenues dans la (ou les) première(s) mémoire(s), la première étape d'utilisation comportant au moins une sous étape de lecture permettant de réaliser une lecture des données standardisées DS contenues dans la (ou les) première(s) mémoire(s).

Autrement dit, la première étape de transmission peut être réalisée par exemple lorsque l'aéronef est au sol au moyen d'un support de stockage qui peut être amovible ou au moyen d'une connexion utilisant un protocole de communication sans fil, établie entre l'aéronef et un serveur informatique agencé au sol.

Le (ou les) premier(s) calculateur(s) permettant de décoder et de traiter les données brutes DB peut (peuvent) ainsi être directement agencé(s) au sol au niveau du serveur informatique de l'exploitant de l'aéronef et permet(tent) ainsi d'extraire certaines données générales telles que par exemple les variations de l'altitude ou de la position GPS de l'aéronef en fonction du temps.

Le (ou les) premier(s) calculateur(s) permet(tent) ainsi de générer des données standardisées DS, décodées et peu volumineuses, qui sont ensuite enregistrées dans la (ou les) première(s) mémoire(s) qui est (sont) elle(s) aussi agencée(s) au sol dans un serveur informatique de l'exploitant de l'aéronef.

Un (ou des) équipement(s) électronique(s) déporté(s) peut alors se connecter par un protocole de communication sans fil ou de type Ethernet connecté à un réseau et utiliser les données standardisées DS contenues dans la (ou les) première(s) mémoire(s). Ce protocole de communication/transfert peut notamment être choisi parmi le groupe comportant par exemple les protocoles de communication sans fil de type Satcom, Wi-Fi, Bluetooth, GSM, GPRS, UMTS et/ou encore un protocole de communication filaire comme Ethernet notamment, pour assurer une utilisation d'un protocole de communication du type TCP/IP notamment.

Cette première étape d'utilisation permet ainsi par exemple à plusieurs applications métiers d'être développées indépendamment par chaque exploitant d'aéronef ou d'autres tiers tels que des fabricants d'accessoires ou de matériels équipant l'aéronef. Les données standardisées DS contenues dans la (ou les) première(s) mémoire(s) sont en effet libres et directement exploitables par les applications métiers utilisées par le (ou les) équipement(s) électronique(s) déporté(s).

Avantageusement, le procédé peut comporter :
- une étape annexe de traitement pour traiter au moins une donnée standardisée DS enregistrée dans la (ou les) première(s) mémoire(s) et/ou les données décodées DD générées par le (ou les) premier(s) calculateur(s), l'étape annexe de traitement permettant de générer au moins une nouvelle donnée standardisée NDS apte à être utilisée par le (ou les) équipement(s) électronique(s) déporté(s), l'étape annexe de traitement étant réalisée par au moins un calculateur annexe, et
- une étape annexe de stockage pour enregistrer la (ou les) nouvelle(s) donnée(s) standardisée(s) dans la (ou les) première(s) mémoire(s).

En d'autres termes, la (ou les) nouvelle(s) donnée(s) standardisée(s) est (sont) générée(s) non plus à partir des données brutes DB mais à partir d'une (ou des) donnée(s) standardisée(s) enregistrée(s) dans la (ou les) première(s) mémoire(s). Dans ce cas, le (ou les) premier(s) calculateur(s) permet ainsi également d'exploiter les différentes applications métiers pour lire une (ou des) donnée(s) standardisée(s) dans la (ou les) première(s) mémoire(s), puis pour écrire la (ou les) nouvelle(s) donnée(s) standardisée(s) dans la (ou les) première(s) mémoire(s).

En pratique, la première étape de transmission, la première étape de décodage, la première étape de traitement et la première étape de stockage peuvent être réalisées lorsque l'aéronef est au sol, le (ou les) premier(s) calculateur(s) et la (ou les) première(s) mémoire(s) étant agencés au sol dans un serveur informatique d'un exploitant de l'aéronef.

Ainsi, une fois la mission de l'aéronef terminée, le pilote, le copilote ou toute autre personne peut alors soit retirer manuellement le support de stockage de son lecteur sur l'aéronef puis l'insérer manuellement dans un lecteur similaire pour transmettre les données brutes DB au serveur informatique installé au sol, soit transmettre au sol les données brutes au serveur informatique relié à une interface comportant un module récepteur utilisant un protocole de communication sans fil tel un protocole Satcom, Wi-Fi, Bluetooth, GSM, GPRS, UMTS.

Selon un exemple de réalisation de l'invention, le procédé peut comporter :
- une deuxième étape de transmission pour transmettre à au moins un second calculateur des données brutes DB issues du (ou des) capteur(s) agencé(s) sur l'aéronef, le (ou les) second(s) calculateur(s) étant distinct(s) à la fois du (ou des) premier(s) calculateur(s) et du (ou des) équipement(s) électronique(s) déporté(s), le (ou les) second(s) calculateur(s) étant agencé(s) à bord de l'aéronef,
- une deuxième étape de décodage pour décoder les données brutes DB lors d'une utilisation de l'aéronef et générer des données décodées DD apte à être traitées lors de cette utilisation de l'aéronef, la deuxième étape de décodage étant réalisée lors de cette utilisation de l'aéronef par le (ou les) second(s) calculateur(s),
- une deuxième étape de traitement pour traiter les données décodées DD et générer des données standardisées DS aptes à être utilisées par le (ou les) équipement(s) électronique(s) déporté(s), la deuxième étape de traitement étant réalisée lors de cette utilisation de l'aéronef par le (ou les) second(s) calculateur(s),
- une deuxième étape de stockage pour enregistrer les données standardisées DS lors de cette utilisation de l'aéronef dans au moins une seconde mémoire, la (ou les) seconde(s) mémoire(s) étant disjointe(s) à la fois de la (ou les) première(s) mémoire(s) et du (ou des) équipement(s) électronique(s) déporté(s), la (ou les) seconde(s) mémoire(s) étant agencée à bord de l'aéronef.

Autrement dit, les données standardisées DS peuvent également être générées quasiment "en temps réel" lors de l'utilisation de l'aéronef par le (ou les) second(s) calculateur(s). Ces données standardisées DS sont alors directement enregistrées dans la (ou les) seconde(s) mémoire(s) équipant cet aéronef. Une telle utilisation de l'aéronef peut consister en une phase vol mais également des phases d'attente ou de roulage au sol dans lesquelles au moins un moteur de l'aéronef est en fonctionnement et/ou des phases de maintenance lorsque le (ou les) moteur(s) de l'aéronef peu(ven)t être éteint(s).

Un passager ou toute personne de l'équipage de l'aéronef peut alors directement utiliser en vol un équipement électronique déporté pour réaliser la première étape d'utilisation des données standardisées DS

Selon un exemple de réalisation avantageux, le procédé comportant :
- une étape annexe de traitement pour traiter au moins une donnée standardisée DS enregistrée dans la (ou les) première(s) mémoire(s) et/ou les données décodées DD générées par le (ou les) premier(s) calculateur(s), l'étape annexe de traitement permettant de générer au moins une nouvelle donnée standardisée NDS apte à être utilisée par le (ou les) équipement(s) électronique(s) déporté(s), l'étape annexe de traitement étant réalisée par au moins un calculateur annexe, et
- une étape annexe de stockage pour enregistrer la (ou les) nouvelle(s) donnée(s) standardisée(s) dans la (ou les) première(s) mémoire(s),
le procédé peut alors comporter une étape de synchronisation des données standardisées DS et des nouvelles données standardisées NDS enregistrées d'une part dans la (ou les) première(s) mémoire(s) et d'autre part dans la (ou les) seconde(s) mémoire(s), l'étape de synchronisation permettant d'effectuer une copie au moins partielle des données standardisées DS et des nouvelles données standardisées NDS contenues dans la (ou les) première(s) mémoire(s) vers la (ou les) seconde(s) mémoire(s) et inversement.

Ainsi, l'étape de synchronisation permet, via par exemple un serveur http, d'utiliser des mécanismes de type "Webservices REST" permettant une lecture et une écriture ponctuelles de type synchrone. Un abonnement et une réception de type asynchrone des évolutions des données standardisées DS contenues dans l'une ou l'autre des première et seconde mémoires sont alors opérés via un protocole de communication réseau par exemple de type "websockets" pour répliquer toutes les modifications opérées sur l'une ou l'autre des première(s) et seconde(s) mémoires. Les différents partenaires tels que l'exploitant de l'aéronef, le fabriquant de l'aéronef ou encore le fabriquant d'un organe particulier peuvent ainsi partager librement leurs données standardisées DS entre eux.

Une telle étape de synchronisation peut bien entendue être réalisée lorsque l'aéronef est posé au sol.

Cependant de manière avantageuse, l'étape de synchronisation peut être effectuée lors de l'utilisation de l'aéronef par au moins un protocole de communication sans fil.

Dans ce cas, toute écriture dans la (ou les) seconde(s) mémoire(s) peut automatiquement être transmise au sol dans la (ou les) première(s) mémoire(s). Le (ou les) protocole(s) de communication sans fil peu(ven)t être choisi parmi le groupe comportant les protocoles Satcom, Wi-Fi, GSM, GPRS et UMTS.

Un dispositif de type "relai" est alors relié à la (ou les) seconde(s) mémoire(s) et surveille en temps réel toute mise à jour des données standardisées DS. Les données standardisées DS transmises au sol sont alors très limitées en poids car uniquement représentatives de la mise à jour qui vient de s'opérer.

Les données standardisées DS sélectionnées sont ainsi envoyées par le dispositif de type relai de l'aéronef à un autre dispositif de type relai localisé au sol permettant de reconstituer dans la (ou les) première(s) mémoire(s) l'image des données standardisées DS contenues dans la (ou les) seconde(s) mémoire(s).

En pratique, le procédé peut comporter :
- une étape de mesure pour mesurer une bande passante du (ou des) protocole(s) de communication sans fil permettant de synchroniser les données standardisées DS et les nouvelles données standardisées NDS enregistrées dans la (ou les) seconde(s) mémoire(s) vers la (ou les) première(s) mémoire(s),
- une étape de comparaison pour comparer la bande passante mesurée avec des valeurs de seuil prédéterminées, et
- une étape d'adaptation d'une quantité de données standardisées DS et de nouvelles données standardisées NDS à transmettre à la (ou les) première(s) mémoire(s), la quantité de données standardisées DS et de nouvelles données standardisées NDS étant fonction d'un résultat de comparaison entre la bande passante mesurée et les valeurs de seuil prédéterminées.

Une telle mesure de la bande passante permet alors de modifier automatiquement le volume de données standardisées DS envoyées au sol par exemple en fonction du type de mission de l'aéronef et de la couverture du (ou des) protocole(s) de communication sans fil. Ainsi, un niveau de priorité élevé peut être affecté à certaines données standardisées DS et nouvelles données standardisées NDS en fonction de la mission de l'aéronef.

De telles données standardisées DS et nouvelles données standardisées NDS peuvent alors être prioritairement transmises au sol tandis que d'autres données standardisées DS ou nouvelles données standardisées NDS moins prioritaires peuvent être transmises ultérieurement lorsque toutes les données standardisées DS et nouvelles données standardisées NDS prioritaires ont été transmises au sol ou uniquement lorsque la bande passante du (ou des) protocole(s) de communication sans fil sera repassée au dessus d'une valeur de seuil prédéterminée.

Selon un exemple de réalisation de l'invention, le procédé comportant :
- une étape annexe de traitement pour traiter au moins une donnée standardisée DS enregistrée dans la (ou les) première(s) mémoire(s) et/ou les données décodées DD générées par le (ou les) premier(s) calculateur(s), l'étape annexe de traitement permettant de générer au moins une nouvelle donnée standardisée NDS apte à être utilisée par le (ou les) équipement(s) électronique(s) déporté(s), l'étape annexe de traitement étant réalisée par au moins un calculateur annexe, et
- une étape annexe de stockage pour enregistrer la (ou les) nouvelle(s) donnée(s) standardisée(s) dans la (ou les) première(s) mémoire(s),
le procédé peut également comporter une deuxième étape d'utilisation permettant à l' (aux) équipement(s) électronique(s) déporté(s) d'utiliser les données standardisées DS et les nouvelles données standardisées NDS contenues dans la (ou les) seconde(s) mémoire(s), la deuxième étape d'utilisation comportant au moins une sous étape de lecture permettant de réaliser une lecture des données standardisées DS et des nouvelles données standardisées NDS contenues dans la (ou les) seconde(s) mémoire(s).

En d'autres termes, un passager ou une personne de l'équipage de l'aéronef peut utiliser, par exemple en vol, un (ou des) équipement(s) électronique(s) déporté(s) pour lire des données standardisées DS contenues dans la (ou les) seconde(s) mémoire(s). Pour ce faire, des protocoles de communication/transfert des données standardisées DS sont mis en oeuvre et peuvent comporter notamment un protocole de communication sans fil qui peut être avantageusement choisi parmi le groupe comportant les protocoles Wi-Fi ou Bluetooth notamment et/ou encore un protocole de communication filaire comme Ethernet notamment, pour assurer une utilisation d'un protocole de communication du type TCP/IP notamment.

Avantageusement, l'une au moins des première étape d'utilisation et deuxième étape d'utilisation peut comporter une sous étape d'écriture permettant de réaliser une écriture d'au moins une nouvelle donnée standardisée NDS dans l'une au moins de la (ou des) première(s) mémoire(s) et de la (ou des) seconde(s) mémoire(s).

Ainsi, le (ou les) équipement(s) électronique(s) déporté(s) peu(ven)t également permettre de générer de nouvelles données standardisées NDS puis de les enregistrer dans la (ou des) première(s) mémoire(s) ou dans la (ou des) seconde(s) mémoire(s). En effet, de tels équipements électroniques déportés comportent une capacité de calcul apte à mettre en oeuvre les algorithmes des applications métiers mis également en oeuvre par le calculateur ou le second calculateur.

En pratique, le procédé peut comporter une étape de vérification comportant :
- une sous étape de comparaison pour comparer la (ou les) nouvelle(s) donnée(s) standardisée(s) NDS avec les données brutes DB et/ou les données standardisées DS enregistrées dans l'une au moins de la (ou des) première(s) mémoire(s) et de la (ou des) seconde(s) mémoire(s), et
- une sous étape d'identification pour identifier une incohérence entre la (ou les) nouvelle(s) donnée(s) standardisée(s) NDS et les données brutes DB et/ou les données standardisées DS enregistrées dans l'une au moins de la (ou des) première(s) mémoire(s) et de la (ou des) seconde(s) mémoire(s).

En d'autres termes, lorsque par exemple une nouvelle donnée standardisée NDS générée par un équipement électronique déporté présente une incohérence avec au moins une autre donnée standardisée DS générée par le premier calculateur ou le second calculateur, alors un message d'alerte peut être généré et transmis à une personne de l'équipage de l'aéronef tel que notamment le pilote ou son copilote et/ou à une personne au sol s'occupant par exemple de la préparation au vol de l'aéronef ou de sa maintenance.

Un tel message d'alerte peut ainsi demander à l'équipage de procéder à une nouvelle acquisition de la (ou les) nouvelle(s) donnée(s) standardisée(s) par exemple lors d'une procédure de vérification de l'aéronef préalablement à une mission.

L'invention et ses avantages apparaîtront avec plus de détails dans le cadre de la description qui suit avec des exemples donnés à titre illustratif en référence aux figures annexées qui représentent :
- la figure 1, est un schéma de principe illustrant une première variante du procédé conforme à l'invention,
- la figure 2, est un logigramme illustrant les étapes mises en oeuvre dans la première variante du procédé conforme à l'invention,
- la figure 3, une vue de coté illustrant un aéronef et un serveur informatique agencé au sol apte à communiquer des données informatisées l'un avec l'autre selon une deuxième variante du procédé conforme à l'invention,
- la figure 4, est un schéma de principe illustrant la deuxième variante du procédé conforme à l'invention, et
- la figure 5, est un logigramme illustrant les étapes mises en oeuvre dans la deuxième variante du procédé conforme à l'invention.

Les éléments présents dans plusieurs figures distinctes peuvent être affectés d'une seule et même référence.

Comme déjà évoqué l'invention se rapporte à un procédé de communication pour communiquer des données informatiques entre au moins un aéronef et au moins un équipement électronique déporté.

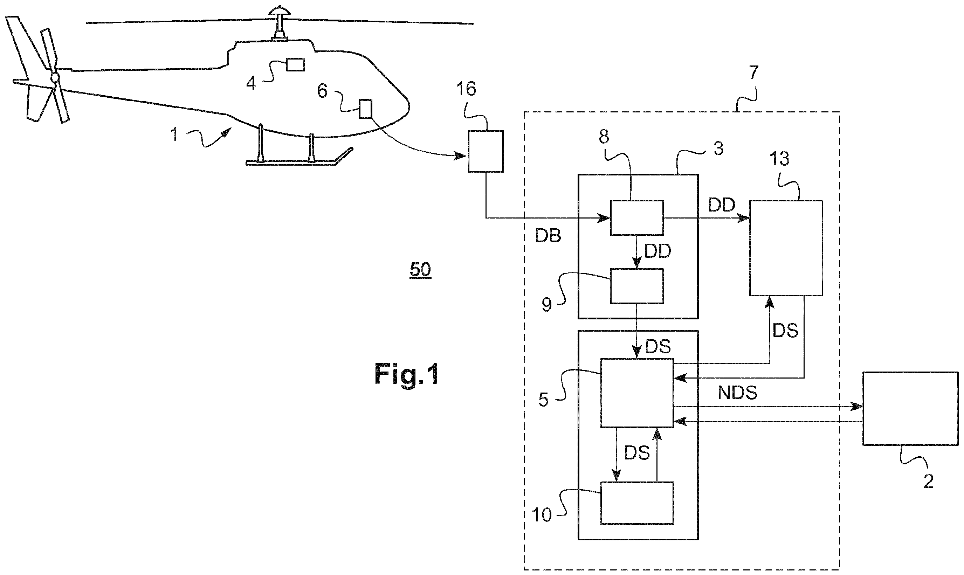

Ainsi selon une première variante du procédé de communication représenté à la figure 1, le procédé de communication 50 permet de communiquer des données informatiques entre d'une part un aéronef 1 représenté ici sous la forme d'un giravion et ou moins un équipement électronique déporté 2.

Conformément à cette première variante du procédé 50, l'aéronef 1 comporte au moins un capteur 4 permettent de détecter des variations d'un paramètre d'état lors d'une phase de vol de l'aéronef 1. Des données informatiques issues de ce capteur 4 sont alors enregistrées en vol sur un support de stockage 6.

Une fois au sol, ce support de stockage 6 peut être extrait de l'aéronef 1 puis être introduit dans une interface 16 formée par un lecteur complémentaire au support de stockage connecté à un serveur informatique 7 agencé au sol. Une telle interface 16 permet ainsi au moins de lire les données informatiques préalablement enregistrées à bord de l'aéronef 1 lors d'une phase d'utilisation de ce dernier. Selon un autre exemple, le support de stockage 6 peut également rester dans l'aéronef comportant des moyens de communications sans fil pour transmettre les données brutes DB à une interface 16 formée dans ce cas par un module récepteur de type Satcom, Wi-Fi, Bluetooth, GSM, GPRS ou UMTS notamment connecté au serveur informatique 7.

A ce stade, les données informatiques lues ou collectées par l'interface 16 se présentent sous la forme de données brutes DB et sont directement transmises à au moins un premier calculateur 3.

Un tel premier calculateur 3 est un moyen informatique permettant notamment d'effectuer des calculs et des comparaisons à partir des données informatiques qu'il reçoit. Un tel premier calculateur 3 peut ainsi comprendre par exemple un processeur, un circuit intégré, un système programmable, un circuit logique, ces exemples ne limitant pas la portée donnée à l'expression "premier calculateur".

Un module décodeur 8 du premier calculateur 3 permet alors de générer des données décodées DD à partir des données brutes DB. Un module de traitement 9 du premier calculateur 3 permet ensuite de générer des données standardisées DS à partir des données décodées DD.

Simultanément certaines données décodées DD peuvent également être transmises à au moins un calculateur annexe 13 permettant de générer d'autres données standardisées DS. Un tel calculateur annexe 13 peut notamment permettre de générer des algorithmes d'une ou plusieurs applications métiers qui peuvent être développées par des tiers tels que par exemple l'exploitant de l'aéronef ou le fabricant d'un composant de l'aéronef 1.

Les données standardisées DS générées par le module de traitement 9 ou par le calculateur annexe 13 sont ensuite transmises à une première mémoire 5 pour les stocker et permettre une utilisation ultérieure pour certaines de ces données standardisées DS.

Un équipement électronique déporté 2 est également connecté à cette première mémoire 5 par exemple au moyen d'un protocole de communication sans fil de type Wi-Fi ou Bluetooth notamment.

Un tel équipement électronique déporté 2 peut ainsi lire des données standardisées DS et des nouvelles données standardisées NDS contenues dans la première mémoire 5 et écrire à son tour de nouvelles données standardisées NDS dans cette première mémoire 5.

Par exemple, un message d'alerte peut être généré par le calculateur annexe 13 sous la forme d'une nouvelle donnée standardisée NDS et transmis à la première mémoire 5. Ce message d'alerte peut alors ensuite être appelé automatiquement de manière asynchrone par l'équipement électrique déporté 2 par une requête de son utilisateur.

Par ailleurs, un dispositif de type relai 10 peut également recevoir de la part de la première mémoire 5 uniquement des mises à jour des données standardisées DS et des nouvelles données standardisées NDS qu'elle contient. Ces mises à jour peuvent alors être transmises à un autre dispositif de type relai non représenté à la figure 1 pour permettre de répliquer le contenu de la première mémoire 5 dans une autre mémoire distante du serveur informatique 7 agencé au sol.

La communication entre deux dispositifs de type relai s'effectue alors via un réseau de communication tel internet notamment.

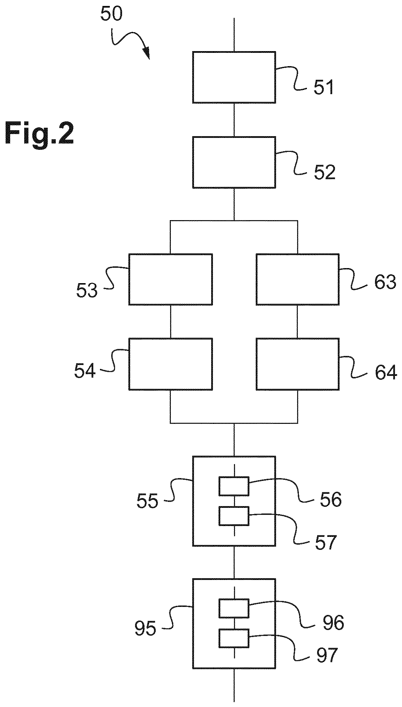

Telle que représentée à la figure 2, cette première variante du procédé de communication 50 comporte ainsi une première étape de transmission 51 pour transmettre au premier calculateur 3 des données brutes DB issues du capteur 4 agencé sur l'aéronef 1.

Le procédé de communication 50 comporte ensuite une première étape de décodage 52 pour décoder les données brutes DB et générer les données décodées DD apte à être traitées. Cette première étape de décodage 52 est réalisée par le premier calculateur 3.

Par ailleurs, le procédé de communication 50 comporte une première étape de traitement 53 pour traiter les données décodées DD et générer les données standardisées DS aptes à être utilisées par l'(ou les) équipement(s) électronique(s) déporté(s) 2. Une telle première étape de traitement 53 est également réalisée par le premier calculateur 3.

Le procédé de communication 50 comporte alors une première étape de stockage 54 pour enregistrer les données standardisées DS dans la première mémoire 5.

Comme déjà évoqué, en parallèle des premières étapes de traitement 53 et de stockage 54, le procédé de communication 50 peut comporter une étape annexe de traitement 63 pour traiter au moins une donnée standardisée DS enregistrée dans la première mémoire 5 et/ou les données décodées DD générées par le premier calculateur 3.

Cette étape annexe de traitement 63 permet ainsi de générer au moins une nouvelle donnée standardisée NDS apte à être utilisée par l'(ou les) équipement(s) électronique(s) déporté(s) 2. En outre, une telle étape annexe de traitement 63 est réalisée par le calculateur annexe 13.

Toujours en parallèle des premières étapes de traitement 53 et de stockage 54, le procédé de communication 50 peut ensuite comporter une étape annexe de stockage 64 pour enregistrer la nouvelle donnée standardisée NDS dans la première mémoire 5.

Le procédé 50 comporte ensuite une première étape d'utilisation 55 permettant à l'(ou aux) équipement(s) électronique(s) déporté(s) 2 d'utiliser, via par exemple un protocole de communication sans fil, les données standardisées DS et les nouvelles données standardisées NDS contenues dans la première mémoire 5.

Par ailleurs, cette première étape d'utilisation 55 comporte au moins une sous étape de lecture 56 permettant de réaliser une lecture des données standardisées DS et des nouvelles données standardisées NDS contenues dans la première mémoire 5.

Enfin, le procédé de communication 50 comporte une étape de vérification 95 comportant :
- une sous étape de comparaison 96 permettant de comparer la nouvelle donnée standardisée NDS générée par le calculateur annexe 13 avec les données brutes DB et/ou les données standardisées DS enregistrées dans la première mémoire 5, et
- une sous étape d'identification 97 permettant d'identifier une incohérence entre cette nouvelle donnée standardisée NDS et les données brutes DB et/ou les données standardisées DS enregistrées dans la première mémoire 5.

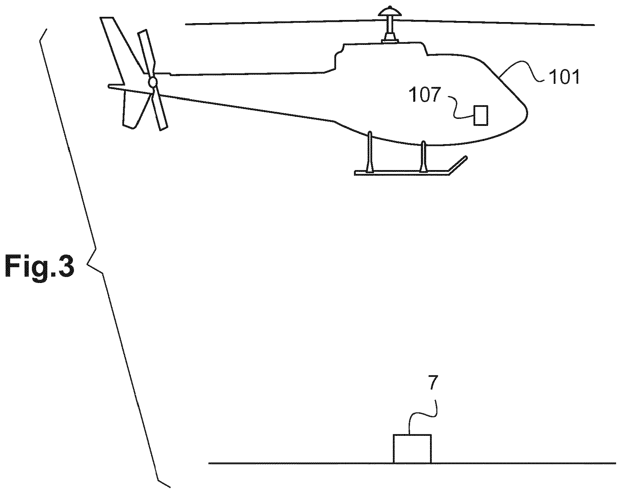

Selon la seconde variante de l'invention et conformément à la figure 3, un aéronef 101 peut également être équipé d'une station embarquée 107 apte à communiquer par un protocole de communication sans fil avec un serveur informatique 7 agencé au sol tel que précédemment décrit à la figure 1. Un tel protocole de communication sans fil peut notamment être choisi parmi le groupe comportant les protocoles Satcom, Wi-Fi, GSM, GPRS et UMTS.

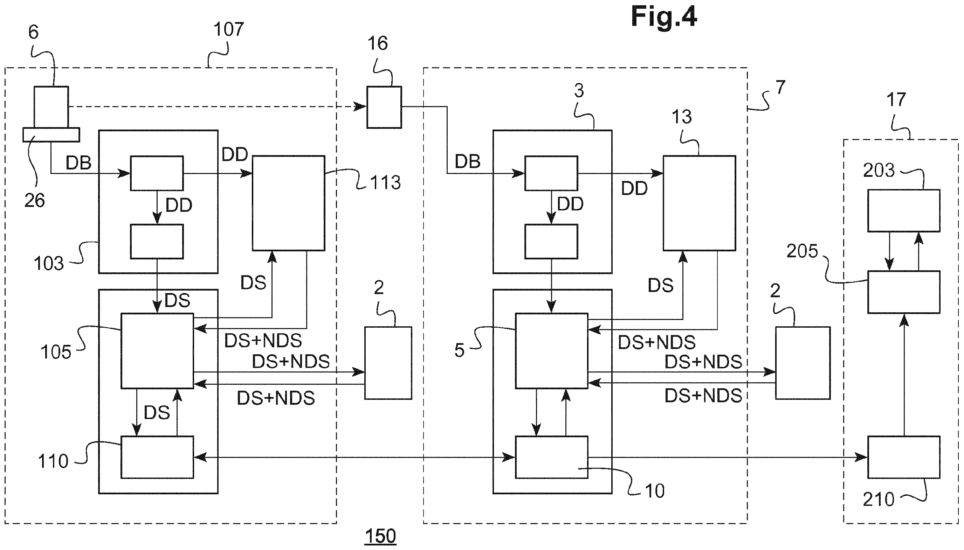

Tel que représenté à la figure 4 et selon une deuxième variante de l'invention correspondant à un protocole de communication 150, l'aéronef 101 comporte un lecteur 26 permettant au moins de lire de façon quasi-instantanée les données informatiques enregistrées sur le support de stockage 6 lors d'une phase d'utilisation de l'aéronef 101.

Ce lecteur 26 est alors intégré à une station embarquée 107 à bord de l'aéronef 101 et permet de recevoir en temps réel des données brutes DB issues du (ou des) capteur(s) 4. Une telle station embarquée 107 comporte quant à elle un second calculateur 103 apte à réaliser les même fonctions que le premier calculateur 3, une seconde mémoire 105 apte à réaliser les même fonctions que la première mémoire 5 et un calculateur annexe 113 apte à réaliser les même fonctions que le calculateur annexe 13.

La station embarquée 107 comporte également un dispositif de type relai 110 permettant de transmettre au dispositif de type relai 10, par un protocole de communication sans fil, uniquement les mises à jour des données standardisées DS. Cette transmission des mises à jour peut alors s'effectuer de la première mémoire 5 vers la seconde mémoire 105, soit inversement de la seconde mémoire 105 vers la première mémoire 5.

Par ailleurs, un autre serveur informatique 17 agencé au sol peut également être relié au serveur informatique 7 et comporter un autre dispositif de type relai 210 pour recevoir les mises à jour des données standardisées DS effectuées dans l'une ou l'autre des première et seconde mémoires 5 et 105. De telles mises à jour sont alors enregistrées dans une troisième mémoire 205 de l'autre serveur informatique 17.

Enfin, le serveur informatique 17 peut également comporter un troisième calculateur 203 apte à lire et utiliser les données standardisées DS contenues dans la troisième mémoire 205 pour éventuellement en générer de nouvelles.

En pratique, un tel serveur informatique 17 peut être installée chez un fabriquant de l'aéronef 101 ou chez un tiers tel que par exemple le fabriquant d'un organe équipant l'aéronef 101.

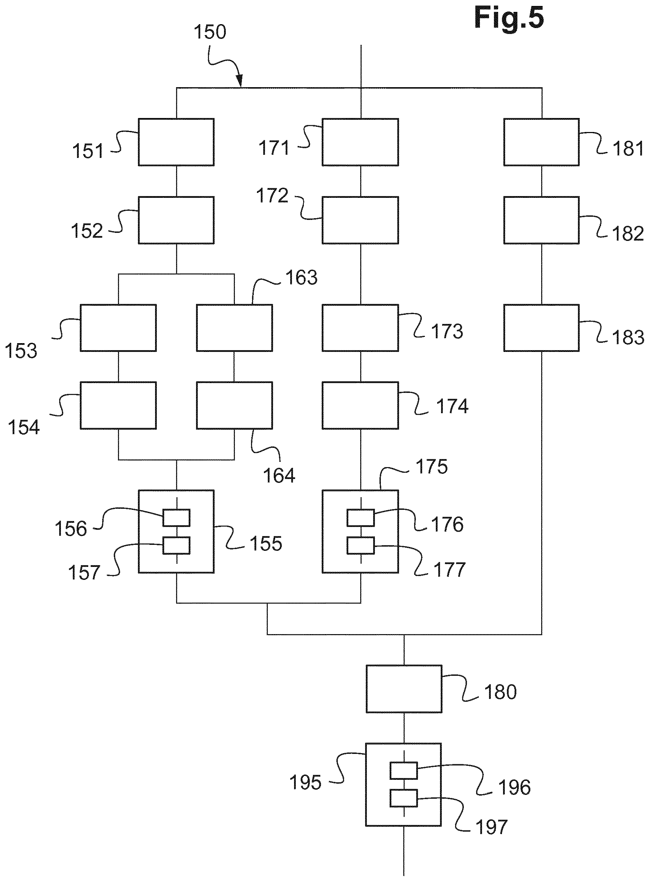

Telle que représentée à la figure 5, la seconde variante du procédé de communication 150 comporte les étapes décrites pour la première variante du procédé de communication 50 à savoir : une première étape de transmission 151, une première étape de décodage 152, une première étape de traitement 153, une première étape de stockage 154 et une première étape d'utilisation 155 effectuée via le serveur informatique 7 et un (ou des) équipement(s) électronique(s) déporté(s) 2.

Par ailleurs, le procédé de communication 150 comporte une deuxième étape de transmission 171 pour transmettre au second calculateur 103 les données brutes DB issues du capteur 4. Ce second calculateur 103 est distinct à la fois du premier calculateur 3 et du (ou des) équipement(s) électronique(s) déporté(s) 2.

En outre, le procédé de communication 150 comporte une deuxième étape de décodage 172 pour décoder les données brutes DB lors d'une utilisation de l'aéronef 101 et générer quasi instantanément des données décodées DD apte à être traitées lors d'une utilisation de l'aéronef. Cette deuxième étape de décodage 172 peut donc être réalisée en vol par le second calculateur 103.

Par suite, le procédé de communication 150 comporte également une deuxième étape de traitement 173 pour traiter les données décodées DD et générer des données standardisées DS aptes à être utilisées par le (ou les) équipement(s) électronique(s) déporté(s) 2. Cette deuxième étape de traitement 173 peut donc être également réalisée en vol par le second calculateur 103.

Ensuite, le procédé de communication 150 comporte une deuxième étape de stockage 174 pour enregistrer les données standardisées DS dans la seconde mémoire 105 embarquée sur l'aéronef 101. Cette seconde mémoire 105 est donc disjointe à la fois de la première mémoire 5 et du (ou des) équipement(s) électronique(s) déporté(s) 2.

Le procédé de communication 150 comporte alors une deuxième étape d'utilisation 175 qui permet à un équipement électronique déporté 2 d'utiliser les données standardisées DS et les nouvelles données standardisées NDS contenues dans la seconde mémoire 105. Cette deuxième étape d'utilisation 175 comporte une sous étape de lecture 176 permettant de réaliser une lecture des données standardisées DS et des nouvelles données standardisées NDS contenues dans la seconde mémoire 105 et une sous étape d'écriture 177 permettant de réaliser une écriture d'au moins une nouvelle donnée standardisée NDS dans la seconde mémoire 105.

En parallèle de ces étapes 151 à 155 et 171 à 175, le procédé de communication 150 peut également comporter une étape de mesure 181 pour mesurer une bande passante du protocole de communication sans fil permettant de synchroniser les données standardisées DS et les nouvelles données standardisées NDS enregistrées dans la seconde mémoire 105 de la station embarquée 107 vers la première mémoire 5 du serveur informatique 7 agencé au sol.

Le procédé de communication 150 comporte alors ensuite une étape de comparaison 182 pour comparer la bande passante mesurée avec des valeurs de seuil prédéterminées, et une étape d'adaptation 183 d'une quantité de données standardisées DS et de nouvelles données standardisées NDS à transmettre à la première mémoire 5. En outre, la quantité de données standardisées DS et de nouvelles données standardisées NDS est déterminée en fonction d'un résultat de comparaison entre la bande passante mesurée et les valeurs de seuil prédéterminées.

Le procédé de communication 150 comporte également une étape de synchronisation 180 des données standardisées DS et des nouvelles données standardisées NDS enregistrées d'une part dans la première mémoire 5 et d'autre part dans la seconde mémoire 105. Une telle étape de synchronisation 180 permet ainsi d'effectuer instantanément une copie au moins partielle des données standardisées DS et nouvelles données standardisées NDS contenues dans la première mémoire 5 vers la seconde mémoire 105 et inversement des données standardisées DS et des nouvelles données standardisées NDS contenues dans la seconde mémoire 105 vers la première mémoire 5.

Enfin, le procédé de communication 150 comporte une étape de vérification 195 comportant :
- une sous étape de comparaison 196 permettant de comparer la nouvelle donnée standardisée NDS générée par l'un des calculateurs annexes 13 et 113 avec les données brutes DB et/ou les données standardisées DS enregistrées dans l'une des première et seconde mémoires 5 et 105, et
- une sous étape d'identification 197 permettant d'identifier une incohérence entre cette nouvelle donnée standardisée NDS et les données brutes DB et/ou les données standardisées DS enregistrées dans l'une des première et seconde mémoires 5 et 105.

Ainsi, il ressort de ce qui précède qu'un procédé de communication conforme à invention est particulièrement avantageux en ce qu'il permet notamment à l'exploitant d'une flotte d'aéronefs d'effectuer des analyses à partir des données standardisées DS et des nouvelles données standardisées NDS issues de sa flotte d'aéronefs. De tels aéronefs peuvent notamment être de même type ou de type différents.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé de communication (50, 150) pour communiquer des données informatiques entre au moins un aéronef (1, 101) et au moins un équipement électronique déporté (2),
**caractérisé en ce que** ledit procédé de communication (50, 150) comporte les étapes suivantes :
• une première étape de transmission (51, 151) pour transmettre à au moins un premier calculateur (3) des données brutes DB issues d'au moins un capteur (4) agencé sur ledit aéronef (1, 101), ledit au moins un capteur (4) étant apte à détecter des variations d'au moins un paramètre d'état lors d'une utilisation dudit aéronef (1, 101), ledit au moins un premier calculateur (3) étant disjoint dudit au moins un aéronef (1, 101) et dudit au moins un équipement électronique déporté (2),
• une première étape de décodage (52, 152) pour décoder lesdites données brutes DB et générer des données décodées DD apte à être traitées, ladite première étape de décodage (52, 152) étant réalisée par ledit au moins un premier calculateur (3),
• une première étape de traitement (53, 153) pour traiter lesdites données décodées DD et générer des données standardisées DS exploitables par plusieurs applications métiers utilisées par ledit au moins un équipement électronique déporté (2), ladite première étape de traitement (53, 153) étant réalisée par ledit au moins un premier calculateur (3),
• une première étape de stockage (54, 154) pour enregistrer lesdites données standardisées DS dans au moins une première mémoire (5), ladite au moins une première mémoire (5) étant disjointe dudit au moins un aéronef (1, 101) et dudit au moins un équipement électronique déporté (2),
• une première étape d'utilisation (55, 155) permettant audit au moins un équipement électronique déporté (2) d'utiliser lesdites données standardisées DS contenues dans ladite au moins une première mémoire (5), ladite première étape d'utilisation (55, 155) comportant au moins une sous étape de lecture (56, 156) permettant de réaliser une lecture desdites données standardisées DS contenues dans ladite au moins une première mémoire (5),
• une étape annexe de traitement (63, 163) pour traiter au moins une donnée standardisée DS enregistrée dans ladite au moins une première mémoire (5) et/ou lesdites données décodées DD générées par ledit au moins un premier calculateur (3), ladite étape annexe de traitement (63, 163) permettant de générer au moins une nouvelle donnée standardisée NDS exploitable par plusieurs applications métiers utilisées par ledit au moins un équipement électronique déporté (2), ladite étape annexe de traitement (63, 163) étant réalisée par au moins un calculateur annexe (13, 113),
• une étape annexe de stockage (64, 164) pour enregistrer ladite au moins une nouvelle donnée standardisée NDS dans ladite au moins une première mémoire (5),
• une deuxième étape de transmission (171) pour transmettre à au moins un second calculateur (103) des données brutes DB issues dudit au moins un capteur (4) agencé sur ledit aéronef (101), ledit au moins un second calculateur (103) étant distinct à la fois dudit au moins un premier calculateur (3) et dudit au moins un équipement électronique déporté (2), ledit au moins un second calculateur (103) étant agencé à bord dudit aéronef (101),
• une deuxième étape de décodage (172) pour décoder lesdites données brutes DB lors d'une utilisation dudit aéronef (101) et générer des données décodées DD apte à être traitées lors d'une utilisation de l'aéronef (101), ladite deuxième étape de décodage (172) étant réalisée lors de ladite utilisation de l'aéronef (101) par ledit au moins un second calculateur (103),
• une deuxième étape de traitement (173) pour traiter lesdites données décodées DD et générer des données standardisées DS exploitables par plusieurs applications métiers utilisées par ledit au moins un équipement électronique déporté (2), ladite deuxième étape de traitement (173) étant réalisée lors de ladite utilisation de l'aéronef (101) par ledit au moins un second calculateur (103),
• une deuxième étape de stockage (174) pour enregistrer lesdites données standardisées DS lors de ladite utilisation dudit aéronef (101) dans au moins une seconde mémoire (105), ladite au moins une seconde mémoire (105) étant disjointe à la fois de ladite au moins une première mémoire (5) et dudit au moins un équipement électronique déporté (2), ladite au moins une seconde mémoire (105) étant agencée à bord dudit aéronef (101), et
• une étape de synchronisation (180) desdites données standardisées DS et desdites nouvelles données standardisées NDS enregistrées d'une part dans ladite au moins une première mémoire (5) et d'autre part dans ladite au moins une seconde mémoire (105), ladite étape de synchronisation (180) permettant d'effectuer une copie au moins partielle desdites données standardisées DS et desdites nouvelles données standardisées NDS contenues dans ladite au moins une première mémoire (5) vers ladite au moins une seconde mémoire (105) et inversement.

2. Procédé selon la revendication 1,
**caractérisé en ce que** ladite première étape de transmission (51), ladite première étape de décodage (52), ladite première étape de traitement (53) et ladite première étape de stockage (54) sont réalisées lorsque ledit aéronef (1, 101) est au sol, ledit au moins un premier calculateur (3) et ladite au moins une première mémoire (5) étant agencés au sol dans un serveur informatique (7) d'un exploitant dudit aéronef (1, 101).

3. Procédé selon la revendication 1,
**caractérisé en ce que** ladite étape de synchronisation (180) est effectuée lors de ladite utilisation dudit aéronef (101) par au moins un protocole de communication sans fil.

4. Procédé selon la revendication 3,
**caractérisé en ce que** ledit procédé (150) comporte :
• une étape de mesure (181) pour mesurer une bande passante dudit au moins un protocole de communication sans fil permettant de synchroniser lesdites données standardisées DS et lesdites nouvelles données standardisées NDS enregistrées dans ladite au moins une seconde mémoire (105) vers ladite au moins une première mémoire (5),
• une étape de comparaison (182) pour comparer ladite bande passante mesurée avec des valeurs de seuil prédéterminées, et
• une étape d'adaptation (183) d'une quantité de données standardisées DS et de nouvelles données standardisées NDS à transmettre à ladite au moins une première mémoire (5), ladite quantité de données standardisées DS et de nouvelles données standardisées NDS étant fonction d'un résultat de comparaison entre ladite bande passante mesurée et lesdites valeurs de seuil prédéterminées.

5. Procédé selon l'une quelconque des revendications 1 à 4, **caractérisé en ce que**, ledit procédé (150) comportant :
• une étape annexe de traitement (63, 163) pour traiter au moins une donnée standardisée DS enregistrée dans ladite au moins une première mémoire (5) et/ou lesdites données décodées DD générées par ledit au moins un premier calculateur (3), ladite étape annexe de traitement (63, 163) permettant de générer au moins une nouvelle donnée standardisée NDS apte à être utilisée par ledit au moins un équipement électronique déporté (2), ladite étape annexe de traitement (63, 163) étant réalisée par au moins un calculateur annexe (13, 113), et
• une étape annexe de stockage (64, 164) pour enregistrer ladite au moins une nouvelle donnée standardisée NDS dans ladite au moins une première mémoire (5),
ledit procédé (150) comporte une deuxième étape d'utilisation (175) permettant audit au moins un équipement électronique déporté (2) d'utiliser lesdites données standardisées DS et lesdites nouvelles données standardisées NDS contenues dans ladite au moins une seconde mémoire (105), ladite deuxième étape d'utilisation (175) comportant au moins une sous étape de lecture (176) permettant de réaliser une lecture desdites données standardisées DS et desdites nouvelles données standardisées NDS contenues dans ladite au moins une seconde mémoire (105).

6. Procédé selon l'une quelconque des revendications 1 à 5,
**caractérisé en ce que** l'une au moins desdites première étape d'utilisation (55, 155) et deuxième étape d'utilisation (175) comporte une sous étape d'écriture (57, 157, 177) permettant de réaliser une écriture d'au moins une nouvelle donnée standardisée NDS dans l'une au moins desdites au moins une première mémoire (5) et au moins une seconde mémoire (105).

7. Procédé selon la revendication 6,
**caractérisé en ce que** ledit procédé (50, 150) comporte une étape de vérification (95, 195) comportant :
• une sous étape de comparaison (96, 196) pour comparer ladite au moins une nouvelle donnée standardisée NDS avec lesdites données brutes DB et/ou lesdites données standardisées DS enregistrées dans l'une au moins desdites au moins une première mémoire (5) et au moins une seconde mémoire (105), et
• une sous étape d'identification (97, 197) pour identifier une incohérence entre ladite au moins une nouvelle donnée standardisée NDS et lesdites données brutes DB et/ou lesdites données standardisées DS enregistrées dans l'une au moins desdites au moins une première mémoire (5) et au moins une seconde mémoire (105).

## Patentansprüche

1. Kommunikationsverfahren (50, 150) zur Kommunikation von Computerdaten zwischen mindestens einem Luftfahrzeug (1, 101) und mindestens einer entfernten elektronischen Einrichtung (2),
**dadurch gekennzeichnet, dass** das Kommunikationsverfahren (50, 150) die folgenden Schritte umfasst:
- einen ersten Übertragungsschritt (51, 151) zum Übertragen von Rohdaten DB, die von mindestens einem an dem Luftfahrzeug (1, 101) angeordneten Sensor (4) stammen, an mindestens einen ersten Rechner (3), wobei der mindestens eine Sensor (4) geeignet ist, Änderungen mindestens eines Zustandsparameters bei einer Verwendung des Luftfahrzeugs (1, 101) zu erfassen, wobei der mindestens eine erste Rechner (3) von dem mindestens einen Luftfahrzeug (1, 101) und der mindestens einen entfernten elektronischen Einrichtung (2) getrennt ist,
- einen ersten Decodierschritt (52, 152) zum Decodieren der Rohdaten DB und zum Erzeugen von zur Verarbeitung geeigneten decodierten Daten DD, wobei der erste Decodierschritt (52, 152) von dem mindestens einen ersten Rechner (3) durchgeführt wird,
- einen ersten Verarbeitungsschritt (53, 153) zum Verarbeiten der decodierten Daten DD und zum Erzeugen von standardisierten Daten DS, die durch mehrere Geschäftsanwendungen nutzbar sind, die von der mindestens einen entfernten elektronischen Einrichtung (2) verwendet werden, wobei der erste Verarbeitungsschritt (53, 153) von dem mindestens einen ersten Rechner (3) durchgeführt wird,
- einen ersten Speicherschritt (54, 154) zum Aufzeichnen der standardisierten Daten DS in mindestens einem ersten Speicher (5), wobei der mindestens eine erste Speicher (5) von dem mindestens einen Luftfahrzeug (1, 101) und der mindestens einen entfernten elektronischen Einrichtung (2) getrennt ist,
- einen ersten Verwendungsschritt (55, 155), der es dem mindestens einen entfernten elektronischen Gerät (2) ermöglicht, die in dem mindestens einen ersten Speicher (5) enthaltenen standardisierten Daten DS zu verwenden, wobei der erste Verwendungsschritt (55, 155) mindestens einen Lese-Unterschritt (56, 156) umfasst, der es ermöglicht, ein Auslesen der in dem mindestens einen ersten Speicher (5) enthaltenen standardisierten Daten DS durchzuführen,
- einen Nebenverarbeitungsschritt (63, 163) zum Verarbeiten mindestens eines in dem mindestens einen ersten Speicher (5) gespeicherten standardisierten Datenwerts DS und/oder der von dem mindestens einen ersten Rechner (3) erzeugten decodierten Daten DD, wobei der Nebenverarbeitungsschritt (63, 163) das Erzeugen mindestens eines neuen standardisierten Datenwerts NDS ermöglicht, der durch mehrere Geschäftsanwendungen nutzbar ist, die von dem mindestens einen entfernten elektronischen Gerät (2) verwendet werden, wobei der Nebenverarbeitungsschritt (63, 163) von mindestens einem Nebenrechner (13, 113) durchgeführt wird,
- einen Nebenspeicherschritt (64, 164) zum Speichern des mindestens einen neuen standardisierten Datenwerts NDS in dem mindestens einen ersten Speicher (5),
- einen zweiten Übertragungsschritt (171) zum Übertragen von von dem mindestens einen an dem Luftfahrzeug (101) angeordneten Sensor (4) stammenden Rohdaten DB an mindestens einen zweiten Rechner (103), wobei der mindestens eine zweite Rechner (103) sowohl von dem mindestens einen ersten Rechner (3) als auch von der mindestens einen entfernten elektronischen Einrichtung (2) verschieden ist, wobei der mindestens eine zweite Rechner (103) an Bord des Luftfahrzeugs (101) angeordnet ist,
- einen zweiten Decodierschritt (172) zum Decodieren der Rohdaten DB bei einer Verwendung des Luftfahrzeugs (101) und zum Erzeugen von decodierten Daten DD, die geeignet sind, bei einer Verwendung des Luftfahrzeugs (101) verarbeitet zu werden, wobei der zweite Decodierschritt (172) bei der Verwendung des Luftfahrzeugs (101) durch dem mindestens einen zweiten Rechner (103) durchgeführt wird,
- einen zweiten Verarbeitungsschritt (173) zum Verarbeiten der decodierten Daten DD und zum Erzeugen von standardisierten Daten DS, die durch mehrere von dem mindestens einen entfernten elektronischen Gerät (2) verwendete Geschäftsanwendungen nutzbar sind, wobei der zweite Verarbeitungsschritt (173) bei der Verwendung des Luftfahrzeugs (101) durch den mindestens einen zweiten Rechner (103) durchgeführt wird,
- einen zweiten Speicherschritt (174) zum Speichern der standardisierten Daten DS in mindestens einem zweiten Speicher (105) während der Verwendung des Luftfahrzeugs (101), wobei der mindestens eine zweite Speicher (105) sowohl von dem mindestens einen ersten Speicher (5) als auch von dem mindestens einen entfernten elektronischen Gerät (2) getrennt ist, wobei der mindestens eine zweite Speicher (105) an Bord des Luftfahrzeugs (101) angeordnet ist; und
- einen Schritt des Synchronisierens (180) der standardisierten Daten DS und der neuen standardisierten Daten NDS, die einerseits in dem mindestens einen ersten Speicher (5) und andererseits in dem mindestens einen zweiten Speicher (105) gespeichert sind, wobei der Schritt des Synchronisierens (180) es ermöglicht, eine zumindest teilweise Kopie der standardisierten Daten DS und der neuen standardisierten Daten NDS, die in dem mindestens einen ersten Speicher (5) enthalten sind, in dem mindestens einen zweiten Speicher (105) zu erstellen und umgekehrt.

2. Verfahren nach Anspruch 1,
**dadurch gekennzeichnet, dass** der erste Übertragungsschritt (51), der erste Decodierschritt (52), der erste Verarbeitungsschritt (53) und der erste Speicherschritt (54) durchgeführt werden, wenn sich das Luftfahrzeug (1, 101) am Boden befindet, wobei der mindestens eine erste Rechner (3) und der mindestens eine erste Speicher (5) am Boden in einem Computerserver (7) eines Betreibers des Luftfahrzeugs (1, 101) angeordnet sind.

3. Verfahren nach Anspruch 1,
**dadurch gekennzeichnet, dass** der Schritt des Synchronisierens (180) während der Verwendung des Luftfahrzeugs (101) über mindestens ein drahtloses Kommunikationsprotokoll durchgeführt wird.

4. Verfahren nach Anspruch 3,
**dadurch gekennzeichnet, dass** das Verfahren (150) umfasst:
- einen Messschritt (181) zum Messen einer Bandbreite des mindestens einen drahtlosen Kommunikationsprotokolls, das eine Synchronisation der standardisierten Daten DS und der neuen standardisierten Daten NDS, die in dem mindestens einen zweiten Speicher (105) gespeichert sind, mit dem mindestens einen ersten Speicher (5) ermöglicht,
- einen Vergleichsschritt (182) zum Vergleichen der gemessenen Bandbreite mit vorgegebenen Schwellenwerten, und
- einen Schritt des Anpassens (183) einer Menge von standardisierten Daten DS und neuen standardisierten Daten NDS, die an den mindestens einen ersten Speicher (5) zu übertragen sind, wobei die Menge von standardisierten Daten DS und neuen standardisierten Daten NDS von einem Ergebnis des Vergleichs zwischen der gemessenen Bandbreite und den vorbestimmten Schwellenwerten abhängt.

5. Verfahren nach einem der Ansprüche 1 bis 4,
**dadurch gekennzeichnet, dass** das Verfahren (150) umfasst:
- einen Nebenverarbeitungsschritt (63, 163) zum Verarbeiten mindestens eines in dem mindestens einen ersten Speicher (5) gespeicherten standardisierten Datenwerts DS und/oder der von dem mindestens einen ersten Rechner (3) erzeugten decodierten Daten DD, wobei der Nebenverarbeitungsschritt (63, 163) das Erzeugen mindestens eines neuen von dem mindestens einen entfernten elektronischen Gerät (2) verwendbaren standardisierten Datenwerts NDS ermöglicht, wobei der Nebenverarbeitungsschritt (63, 163) von mindestens einem Nebenrechner (13, 113) ausgeführt wird, und
- einen Nebenspeicherschritt (64, 164) zum Speichern des mindestens einen neuen standardisierten Datenwerts NDS in dem mindestens einen ersten Speicher (5),
wobei das Verfahren (150) einen zweiten Verwendungsschritt (175) umfasst, der es dem mindestens einen entfernten elektronischen Gerät (2) ermöglicht, die standardisierten Daten DS und die neuen standardisierten Daten NDS, die in dem mindestens einen zweiten Speicher (105) enthalten sind, zu verwenden, wobei der zweite Verwendungsschritt (175) mindestens einen Lese-Unterschritt (176) umfasst, der es ermöglicht, ein Lesen der standardisierten Daten DS und der neuen standardisierten Daten NDS, die in dem mindestens einen zweiten Speicher (105) enthalten sind, durchzuführen.

6. Verfahren nach einem der Ansprüche 1 bis 5,
**dadurch gekennzeichnet, dass** der erste Verwendungsschritt (55, 155) und/oder der zweite Verwendungsschritt (175) einen Schreibunterschritt (57, 157, 177) zum Durchführen eines Schreibens von mindestens einem neuen standardisierten Datenwert NDS in den mindestens einen ersten Speicher (5) und/oder den mindestens einen zweiten Speicher (105) umfasst.

7. Verfahren nach Anspruch 6,
**dadurch gekennzeichnet, dass** das Verfahren (50, 150) einen Verifizierungsschritt (95, 195) umfasst, der umfasst:
- einen Vergleichs-Unterschritt (96, 196) zum Vergleichen des mindestens einen neuen standardisierten Datenwerts NDS mit den Rohdaten DB und/oder den standardisierten Daten DS, die in dem mindestens einen ersten Speicher (5) und/oder dem mindestens einen zweiten Speicher (105) gespeichert sind, und
- einen Identifikations-Unterschritt (97, 197) zum Identifizieren einer Inkonsistenz zwischen dem mindestens einen neuen standardisierten Datenwert NDS und den Rohdaten DB und/oder den standardisierten Daten DS, die in dem mindestens einen ersten Speicher (5) und/oder dem mindestens einen zweiten Speicher (105) gespeichert sind.

## Claims

1. Communication method (50, 150) for conveying computer data between at least one aircraft (1, 101) and at least one remote item of electronic equipment (2),
**characterised in that** said communication method (50, 150) comprises the following steps:
• a first transmission step (51, 151) for transmitting raw DB data from at least one sensor (4) arranged on said aircraft (1, 101) to at least one first computer (3), said at least one sensor (4) being capable of detecting variations in at least one state parameter during a utilisation of said aircraft (1, 101), said at least one first computer (3) being separate from said at least one aircraft (1, 101) and from said at least one remote item of electronic equipment (2),
• a first decoding step (52, 152) for decoding said raw DB data and for generating decoded DD data capable of being processed, said first decoding step (52, 152) being carried out by said at least one first computer (3),
• a first processing step (53, 153) for processing said decoded DD data and for generating standardised DS data that can be used by a plurality of industry applications used by said at least one remote item of electronic equipment (2), said first processing step (53, 153) being carried out by said at least one first computer (3),
• a first storage step (54, 154) for storing said standardised DS data in at least one first memory (5), said at least one first memory (5) being separate from said at least one aircraft (1, 101) and from said at least one remote item of electronic equipment (2),
• a first utilisation step (55, 155) allowing said at least one remote item of electronic equipment (2) to use said standardised DS data contained in said at least one first memory (5), said first utilisation step (55, 155) comprising at least one reading sub-step (56, 156) allowing said standardised DS data contained in said at least one first memory (5) to be read,
• an auxiliary processing step (63, 163) for processing at least one standardised DS datum stored in said at least one first memory (5) and/or said decoded DD data generated by said at least one first computer (3), said auxiliary processing step (63, 163) allowing at least one new standardised NDS datum to be generated that can be used by a plurality of industry applications used by said at least one remote item of electronic equipment (2), said auxiliary processing step (63, 163) being carried out by an auxiliary computer (13, 113),
• an auxiliary storage step (64, 164) for storing said at least one new standardised NDS datum in said at least one first memory (5),
• a second transmission step (171) for transmitting raw DB data from said at least one sensor (4) arranged on said aircraft (101) to at least one second computer (103), said at least one second computer (103) being separate both from said at least one first computer (3) and from said at least one remote item of electronic equipment (2), said at least one second computer (103) being arranged on board said aircraft (101),
• a second decoding step (172) for decoding said raw DB data during a utilisation of said aircraft (101) and for generating decoded DD data capable of being processed during a utilisation of the aircraft (101), said second decoding step (172) being carried out by said at least one second computer (103) during said utilisation of the aircraft (101),
• a second processing step (173) for processing said decoded DD data and for generating standardised DS data that can be used by a plurality of industry applications used by said at least one remote item of electronic equipment (2), said second processing step (173) being carried out by said at least one second computer (103) during said utilisation of the aircraft (101),
• a second storage step (174) for storing said standardised DS data during said utilisation of said aircraft (101) in at least one second memory (105), said at least one second memory (105) being separate both from said at least one first memory (5) and from said at least one remote item of electronic equipment (2), said at least one second memory (105) being arranged on board said aircraft (101), and
• a step (180) of synchronising said standardised DS data and said new standardised NDS data stored, on the one hand, in said at least one first memory (5) and, on the other hand, in said at least one second memory (105), said synchronising step (180) allowing said standardised DS data and said new standardised NDS data contained in said at least one first memory (5) to be at least partially copied to said at least one second memory (105), and vice versa.

2. Method according to Claim 1,
**characterised in that** said first transmission step (51), said first decoding step (52), said first processing step (53) and said first storage step (54) are carried out when said aircraft (1, 101) is on the ground, with said at least one first computer (3) and said at least one first memory (5) being arranged on the ground in a computer server (7) of an operator of said aircraft (1, 101).

3. Method according to Claim 1,
**characterised in that** said synchronising step (180) is carried out during said utilisation of said aircraft (101) with at least one wireless communication protocol.

4. Method according to Claim 3,
**characterised in that** said method (150) comprises:
• a measurement step (181) for measuring a passband of said at least one wireless communication protocol allowing said standardised DS data and said new standardised NDS data stored in said at least one second memory (105) to be synchronised with said at least one first memory (5),
• a comparison step (182) for comparing said measured passband with predetermined threshold values, and
• a step (183) of matching an amount of standardised DS data and of new standardised NDS data to be transmitted to said at least one first memory (5), with said amount of standardised DS data and of new standardised NDS data being a function of a result of the comparison between said measured passband and said predetermined threshold values.

5. Method according to any one of Claims 1 to 4, **characterised in that** said method (150) comprises:
• an auxiliary processing step (63, 163) for processing at least one standardised DS datum stored in said at least one first memory (5) and/or said decoded DD data generated by said at least one first computer (3), said auxiliary processing step (63, 163) allowing at least one new standardised NDS datum to be generated that can be used by said at least one remote item of electronic equipment (2), said auxiliary processing step (63, 163) being carried out by at least one auxiliary computer (13, 113), and
• an auxiliary storage step (64, 164) for storing said at least one new standardised NDS datum in said at least one first memory (5),
said method (150) comprises a second utilisation step (175) allowing said at least one remote item of electronic equipment (2) to use said standardised DS data and said new standardised NDS data contained in said at least one second memory (105), said second utilisation step (175) comprising at least one reading sub-step (176) allowing said standardised DS data and said new standardised NDS data contained in said at least one second memory (105) to be read.

6. Method according to any one of Claims 1 to 5,
**characterised in that** at least one from among said first utilisation step (55, 155) and said second utilisation step (175) comprises a writing sub-step (57, 157, 177) allowing at least one new standardised NDS datum to be written in at least one from among said at least one first memory (5) and said at least one second memory (105).

7. Method according to Claim 6,
**characterised in that** said method (50, 150) comprises a checking step (95, 195) comprising:
• a comparison sub-step (96, 196) for comparing said at least one new standardised NDS datum with said raw DB data and/or with said standardised DS data stored in at least one from among said at least one first memory (5) and at least one second memory (105), and
• an identification sub-step (97, 197) for identifying any incoherence between said at least one new standardised NDS datum and said raw DB data and/or said standardised DS data stored in at least one from among said at least one first memory (5) and at least one second memory (105).
